# EUROPEAN PATENT APPLICATION

(11) **EP 2 846 561 A1**
(43) Date of publication of application: **11.03.2015**
(21) Application number: 12878466.7
(22) Date of filing: 30.07.2012
(51) Int. Cl.: H04W 4/02

(54) **METHOD AND SERVER FOR INFORMATION PROCESSING**

(30) Priority: 08.06.2012 CN 201210188631
(71) Applicant: ZTE Corporation, Shenzhen, Guangdong 518057 (CN)
(72) Inventor: FAN, Xia, Shenzhen Guangdong 518057 (CN)
(74) Representative: Price, Nigel John King
(86) International application number: PCT/CN2012/079377
(87) International publication number: WO 2013/181883

(57) **Abstract**

A method for information processing is disclosed. The method includes that a server acquires the first co-purchase information which is related to a consumption place and input by a first consumer; according to the geological location of the consumption place, the server acquires the second co-purchase information which is related to the consumption place and input by other consumers; the server pushes the second co-purchase information to the first consumer; when the first consumer determines to participate in a co-purchase that other consumers have joined in, the server generates consumption information of each consumer according to the first co-purchase information and the second co-purchase information; and the server pushes the consumption information of each consumer to the first consumer and the other consumers. Accordingly, a server for information processing is disclosed. As a result, the server may help a consumer look for other co-purchasers in time according to the location of the consumption place, and the consumers can communicate with each other through a Social Networking Services (SNS) platform, thereby improving the user experience effectively.

## Description

### TECHNICAL FIELD

The disclosure relates to the technical field of communications, and more particularly to a method and server for information processing.

### BACKGROUND

A Location Based Service (LBS) has gradually become available to each consumer having a cell phone or being able to access Internet; the LBS can use a location function of PDA, cell phone or other Internet-enabled devices to combine consumer information with location information, so as to provide the consumer with various location-related services, such as merchant information and location lookup; in the past two years, LBS plus group purchase has entered into the domestic market and become a new purchase means.

The existing co-purchase is mainly initiated by a groupon website based on a group-purchase mode, and specifically includes that the terms of a transaction are set, that is, a fixed type of merchandise, the amount of the merchandise, and the price of the merchandise after the amount is achieved are set, and then consumers purchase the specified merchandise after participating in the group purchase. However, existing information processing is lack of flexibility and timeliness, which reduces the user experience.

### SUMMARY

For solving the above technical problems, the embodiments of the disclosure provide a method and server for information processing, which can improve the user experience effectively.

To this end, the embodiment of the disclosure provides a method for information processing; the method includes that:
a server acquires first co-purchase information which is related to a consumption place and input by a first consumer;
the server acquires second co-purchase information which is related to the consumption place and input by other consumers according to the geological location of the consumption place;
the server pushes the second co-purchase information to the first consumer;
when the first consumer determines to participate in a co-purchase that the other consumers have joined in, the server generates consumption information of each consumer according to the first co-purchase information and the second co-purchase information; and
the server pushes the consumption information of each consumer to the first consumer and the other consumers.

Preferably, before the server pushes the second co-purchase information to the first consumer, the method further includes that:
the server determines whether the second co-purchase information and the first co-purchase information comply with a predetermined policy; if complying with the predetermined policy, the step that the server pushes the second co-purchase information to the first consumer is executed; if not, the process is ended.

Preferably, the predetermined policy includes that: both the second co-purchase information and the first co-purchase information are related to the same merchant in the consumption place; or, both the second co-purchase information and the first co-purchase information are related to the same merchandise in the consumption place; or, both the second co-purchase information and the first co-purchase information are related to the same brand in the consumption place.

Preferably, when the first consumer determines to participate in a co-purchase that the other consumers have joined in, the method further includes that:
the server receives communication information which is sent by the first consumer or the other consumers through a Social Networking Services (SNS) interaction platform, and correspondingly pushes the communication information to the other consumers or the first consumer; and
the server receives reply information which is sent by the other consumers or the first consumer through the SNS interaction platform, and correspondingly pushes the reply information to the first consumer or the other consumers.

Preferably, when there is multiple pieces of second co-purchase information, the server pushing the second co-purchase information to the first consumer is that:
the server sorts the multiple pieces of second co-purchase information according to discounts; and
the server pushes the sorted multiple pieces of second co-purchase information to the first consumer.

Preferably, the method further includes that:
the server pushes advertising information of the consumption place to the first consumer and/or the other consumers.

Preferably, before the server generates the consumption information of each consumer according to the first co-purchase information and the second co-purchase information, the method further includes that:
the server determines whether the other consumers allow the first consumer to participate in the co-purchase; if not allowed, the flow of the method for information processing is ended; if allowed, the step that the server generates the consumption information of each consumer according to the first co-purchase information and the second co-purchase information is executed.

Preferably, after the co-purchase is ended, the method further includes that:
the server receives evaluation made by the first consumer to the other consumers on the SNS interaction platform; and/or
the server receives evaluation made by the other consumers to the first consumer on the SNS interaction platform.

To this end, the disclosure also provides a server for information processing; the server includes a data processing platform; the data processing platform includes:
a first acquiring module, which is configured to acquire first co-purchase information which is related to a consumption place and input by a first consumer;
a second acquiring module, which is configured to acquire second co-purchase information which is related to the consumption place and input by other consumers according to the geological location of the consumption place;
a first pushing module, which is configured to push the second co-purchase information to the first consumer;
a processing module, which is configured to, when the first consumer determines to participate in a co-purchase that other consumers have joined in, generate consumption information of each consumer according to the first co-purchase information and the second co-purchase information; and
a second pushing module, which is configured to push the consumption information of each consumer to the first consumer and the other consumers.

Preferably, the server further includes an SNS interaction platform; the SNS interaction platform includes:
an interacting module, which is configured to receive communication information which is sent by the first consumer or the other consumers, and push the communication information to the other consumers or the first consumer; besides, the interacting module is further configured to receive reply information which is sent by the other consumers or the first consumer, and push the reply information to the first consumer or the other consumers; and
an evaluating module, which is configured to receive evaluation made by the first consumer to the other consumers, and/or receive evaluation made by the other consumers to the first consumer.

It can be seen from the above technical solution that the embodiments of the disclosure has the following beneficial effects:
1) a server can help a consumer look for other co-purchasers in time according to the location of a consumption place, thereby making maximum use of promotions of the consumption place; and
(2) during information processing, the first consumer and other consumers may communicate with each other through the SNS interaction platform, thereby improving the user experience effectively.

### BRIEF DESCRIPTION OF THE DRAWINGS

Fig. 1 is a flowchart of a method for information processing in an embodiment of the disclosure;
Fig. 2 is a flowchart of a method for processing a request for group purchase from a consumer in an embodiment of the disclosure;
Fig. 3 is a flowchart of a method for group purchase in an embodiment of the disclosure; and
Fig. 4 is a structure diagram of a server in an embodiment of the disclosure.

### DETAILED DESCRIPTION

For making the object, the technical solutions and the advantages of the embodiments of the disclosure more clear, the implementation of the disclosure is elaborated below with reference to the embodiments and the accompanying drawings in detail. Here, the embodiments of the disclosure and the description thereof are used for illustrating the disclosure but not intended to limit the disclosure.

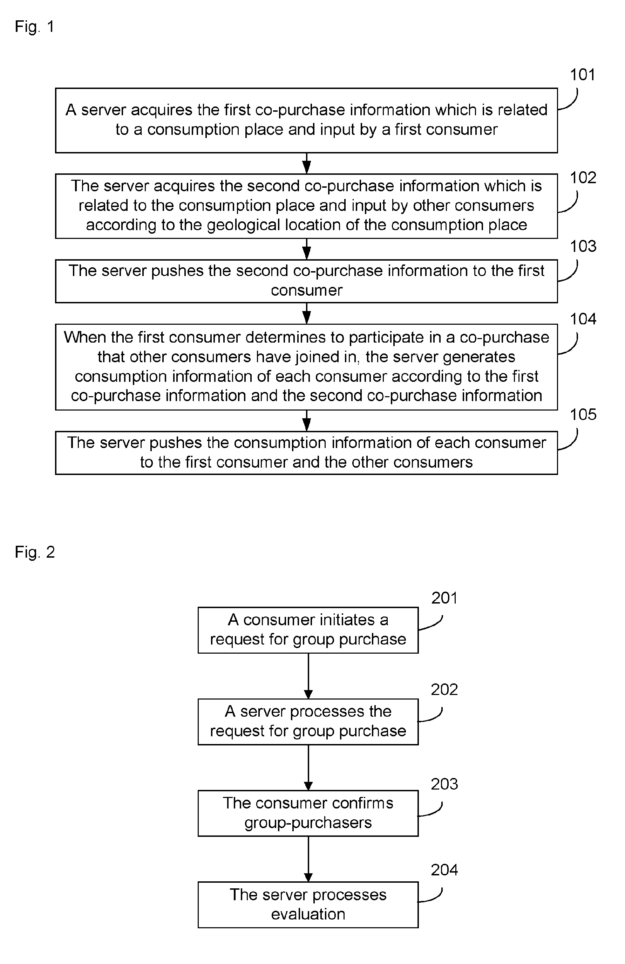

Fig. 1 is a flowchart of a method for information processing in an embodiment of the disclosure, including the following steps.

Step 101: A server acquires first co-purchase information which is related to a consumption place and input by a first consumer;
the above first co-purchase information is for representing group-purchase information of the first consumer, including the name of merchandise, the model of the merchandise, the price of the merchandise, and/or the discount of the merchandise, and so on.

The above first co-purchase information which is related to a consumption place means that the merchandise involved in the first co-purchase information is related to the consumption place, for example, a shop selling the merchandise locates in the consumption place. The consumption place may be a shopping mall, a cinema, a restaurant, and so on.

Step 102: The server acquires second co-purchase information which is related to the consumption place and input by other consumers according to the geological location of the consumption place;
in the embodiment of the disclosure, the geological location of the consumption place may be automatically included in the first co-purchase information and transmitted to the server through the first co-purchase information; or, the server may also acquire, through the Global Positioning System (GPS) technology, the current location of the first consumer to further acquire the geological location of the consumption place where the first consumer is.
Step 103: The server pushes the second co-purchase information to the first consumer;
in another embodiment of the disclosure, before executing Step 103, the method for information processing further includes that:
the server determines whether the second co-purchase information and the first co-purchase information comply with a predetermined policy; if they comply with the predetermined policy, Step 103 is then executed; if not, the flow of the method for information processing is ended;
that is, it is determined whether the second co-purchase information and the first co-purchase information are directed to the group purchase of the same merchandise or in the same shop; the predetermined policy is for determining whether the first co-purchase information is related to the second co-purchase information.

For example, the predetermined policy includes that both the second co-purchase information and the first co-purchase information are related to the same merchant in the consumption place; or, both the second co-purchase information and the first co-purchase information are related to the same merchandise in the consumption place; or, both the second co-purchase information and the first co-purchase information are related to the same brand in the consumption place. It should be noted that the details of the predetermined policy are not limited in the embodiment of the disclosure.

In another embodiment of the disclosure, when there are multiple pieces of second co-purchase information, Step 103 may include that:
firstly, the server sorts the second co-purchase information according to discounts; at this point, the second co-purchase information includes discounts;
then, the server pushes the sorted second co-purchase information to the first consumer.

Step 104: When the first consumer determines to participate in co-purchase that other consumers have joined in, the server generates consumption information of each consumer according to the first co-purchase information and the second co-purchase information;
in another embodiment of the disclosure, before Step 104, it may be determined whether other consumers allow the first consumer to participate in the co-purchase, at this point, the method for information processing further includes that:

the server determines whether other consumers allow the first consumer to participate in; if not allowed, the flow of the method for information processing is ended; if allowed, Step 104 is executed.

In another embodiment of the disclosure, when the first consumer determines to participate in co-purchase that other consumers have joined in, the first consumer and other consumers may communicate with each other through an SNS interaction platform, so as to determine where to meet and other related information; at this point, the method for information processing may further include that:
the server receives communication information which is sent by the first consumer or the other consumers through the SNS interaction platform, and pushes the communication information to the other consumers or the first consumer; and
the server receives reply information which is sent by the other consumers or the first consumer through the SNS interaction platform, and pushes the reply information to the first consumer or the other consumers.

Step 105: The server pushes the consumption information of each consumer to the first consumer and other consumers.

In another embodiment of the disclosure, the server may further broadcast advertising information to the consumers who have purchased merchandise in the consumption place; at this point, the method for information processing further includes that:
firstly, the server receives the advertising information from the consumption place;
then, the server pushes the advertising information from the consumption place to the first consumer and/or other consumers.

In another embodiment of the disclosure, after the co-purchase is ended, the first and other consumers may evaluate each other on the SNS interaction platform for a credit reference in future; the method for information processing further includes that:
the server receives evaluation made by the first consumer to other consumers on the SNS interaction platform; and/or
the server receives evaluation made by other consumers to the first consumer on the SNS interaction platform.

The flowchart of a method for group purchase in an embodiment of the disclosure is described below by taking a shopping mall as the consumption place for example, in combination with Fig. 2; the specific steps are as follows.

Step 201: A consumer logs in a co-purchase system through a client, and the consumer inputs into a server or the server acquires the location of a shopping mall where the consumer is; the consumer inputs information of co-purchase, namely group-purchase.

Step 202: The server firstly confirms, according to the above information, whether there are group-purchasers having the same need nearby; the server figures out the discounts according to information of different group-purchasers, sorts and displays the discounts on the client.

Step 203: The consumers determine whether to make a request for group purchase and whether to accept the request for group purchase, and allow communication on the SNS interaction platform through the client, so as to determine where to meet.

Step 204: After the total payment is paid, the amount that each consumer needs to pay with enjoyed discount is figured out according to the co-purchase system, so that the consumers pay the amount respectively; at the same time, the consumers evaluate this co-purchase experience on the SNS interaction platform through their own clients.

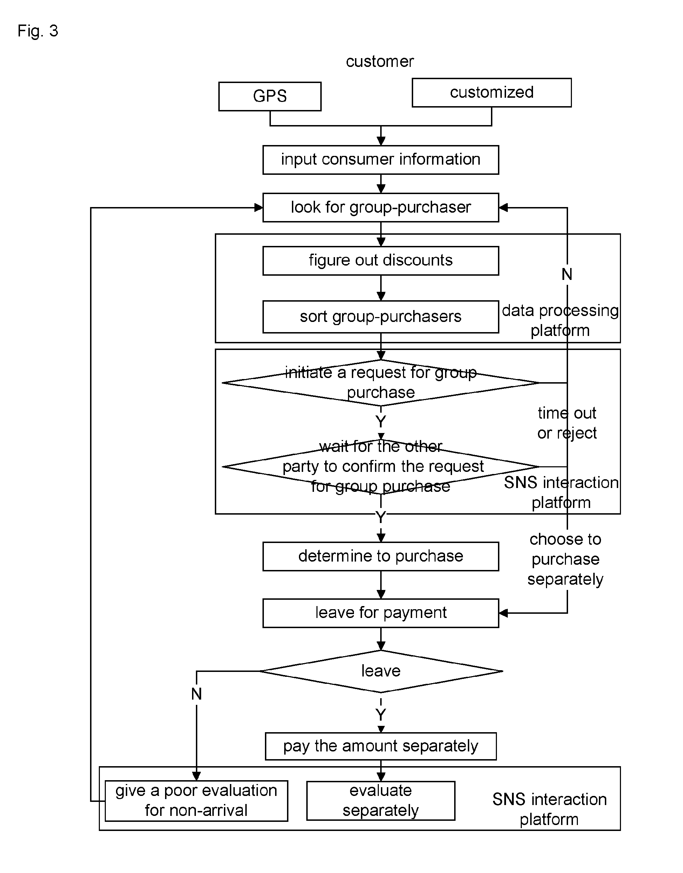

For making the technical means implemented by the disclosure easier to understand, the flow of information processing is described in combination with Fig. 3 and specific embodiments; wherein the server includes a data processing platform and a SNS interaction platform; the specific way is as follows.

### Embodiment 1

Firstly, inputting consumer information
consumer A firstly logs in a co-purchase system through the client of the consumer A, the consumer A inputs to a server or the server automatically acquires, through the GPS technology, the location of a shopping mall where the consumer A is; the consumer A inputs information of co-purchase, namely group-purchase, and initiates a request for group purchase.

Then, looking for group-purchasers
the server firstly confirms, according to the above information, whether there are group-purchasers having the same need nearby; the data processing platform in the server figures out the discounts according to information of different group-purchasers, pushes the information of consumer B, consumer C and consumer D to the consumer A in order and displays these pieces of information on the client of the consumer A.

Then, initiating a request for group purchase, and waiting for the other party to confirm the request for group purchase
the consumer A initiates the request for group purchase to the consumer B, and friendly communicates with the consumer B through the SNS interaction platform; if the consumer B accepts the request for group purchase on his/her client, then the two parties appoint a place to meet through the SNS interaction platform and then leave there to purchase and pay.

Then, determining to purchase, and leaving for payment
during payment, the amount that each consumer needs to pay with enjoyed discount is figured out according to the co-purchase system, so that the consumers pay the amount respectively; at the same time, the consumers evaluate this co-purchase experience on the SNS interaction platform through their own clients to take the evaluation as a credit reference in future.

### Embodiment 2

Firstly, inputting consumer information
the consumer A firstly logs in the co-purchase system through his/her client, the consumer A inputs to the server or the server automatically acquires, through the GPS technology, the location of a shopping mall where the consumer A is; the consumer A inputs information of co-purchase, namely group-purchase, and initiates a request for group purchase.

Then, looking for the group-purchasers by the server
the server firstly confirms, according to the above information, whether there are group-purchasers having the same need nearby; the data processing platform in the server figures out the discounts according to information of different group-purchasers, pushes the information of the consumer B to the consumer A and displays the information of the consumer B on the client of the consumer A;
since the consumer B does not meet expectation of the consumer A, the consumer A chooses to continue to look for a group-purchaser, and the processing is made by the co-purchase system; at this point, since requests from the consumer C and the consumer D are added, the consumer C, the consumer D and the consumer B are pushed and displayed to the consumer A in order.

Then, initiating a request for group purchase, and waiting for the other party to confirm the request for group purchase
the consumer A initiates the request for group purchase to the consumer C, and friendly communicates with the consumer C through the SNS interaction platform; if the consumer C accepts the request for group purchase on the client of the consumer C, then the two parties appoint a place to meet through the SNS interaction platform and then leave there to purchase and pay;
during payment, the amount that each consumer needs to pay with enjoyed discount is figured out according to the co-purchase system, so that the consumers pay the amount respectively; at the same time, the consumers evaluate this co-purchase experience on the SNS interaction platform through their own clients so as to take the evaluation as a credit reference in future.

### Embodiment 3

Firstly, inputting consumer information
the consumer A firstly logs in the co-purchase system through the client of the consumer A, the consumer A inputs to the server or the server automatically acquires, through the GPS technology, the location of a shopping mall where the consumer is; the consumer A inputs co-purchase, namely group-purchase information, and initiates a request for group purchase.

Then, looking for the group-purchasers by the server
the server firstly confirms, according to the above information, whether there are group-purchasers having the same need nearby; the data processing platform in the server figures out the discounts according to information of different group-purchasers, pushes the information of the consumer B, the consumer C and the consumer D to the consumer A in order and displays these pieces of information on the client/

Then, initiating a request for group purchase, and waiting for the other party to confirm the request for group purchase
the consumer A initiates the request for group purchase to the consumer B, and friendly communicates with the consumer B through the SNS interaction platform; if the consumer B rejects the request for group purchase on the client of the consumer B, or does not respond when time is over, then the consumer A chooses to continue to look for a group-purchaser.

### Embodiment 4

Firstly, inputting consumer information
the consumer A firstly logs in the co-purchase system through the client of the consumer A, and the consumer A inputs to the server or the server automatically acquires, through the GPS technology, the location of a shopping mall where the consumer is; the consumer A inputs information of co-purchase, namely group-purchase, and initiates a request for group purchase.

Then, looking for the group-purchasers by the server;
the server firstly confirms, according to the above information, whether there are group-purchasers having the same need nearby; the data processing platform in the server figures out the discounts according to information of different group-purchasers, pushes the information of the consumer B, the consumer C and the consumer D to the consumer A in order and displays these pieces of information on the client.

Then, initiating a request for group purchase, and waiting for the other to confirm
the consumer A initiates the request for group purchase to the consumer B, and friendly communicates with the consumer B through the SNS interaction platform; if the consumer B accepts the request for group purchase on the client of the consumer B, then the two parties appoint a place to meet through the SNS interaction platform and then leave there to purchase and pay;
if the consumer B does not come, the consumer A then gives a poor evaluation to the consumer B, and continues to look for a group-purchaser.

### Embodiment 5

The shopping mall presents a promotions advertisement to a server interface. When publishing the advertisement, the server searches a database for the consumer A, the consumer B, the consumer C and the consumer D which participated in co-purchase in the shopping mall, and pushes the advertisement to their accounts.

When the consumer A, the consumer B, the consumer C and the consumer D log in their own clients, they may receive promotions information of the shopping mall in time.

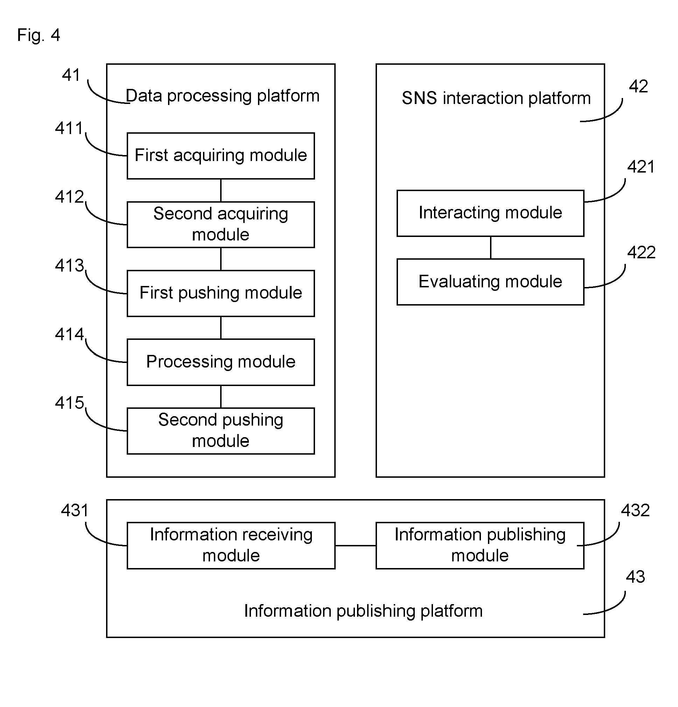

Fig. 4 is a structure diagram of a server in an embodiment of the disclosure; the server includes a data processing platform 41; the data processing platform 41 includes:
a first acquiring module 411, which is configured to acquire first co-purchase information which is related to a consumption place and input by a first consumer;
a second acquiring module 412, which is configured to acquire second co-purchase information which is related to the consumption place and input by other consumers according to the geological location of the consumption place;
a first pushing module 413, which is configured to push the second co-purchase information to the first consumer;
a processing module 414, which is configured to, when the first consumer determines to participate in the co-purchase that other consumers have joined in, generate consumption information of each consumer according to the first co-purchase information and the second co-purchase information; and
a second pushing module 415, which is configured to push the consumption information of each consumer to the first consumer and the other consumers.

In another embodiment of the disclosure, the server further includes an SNS interaction platform 42; the SNS interaction platform 42 includes:
an interacting module 421, which is configured to receive communication information which is sent by the first consumer or the other consumers, and push the communication information to the other consumers or the first consumer; besides, the interacting module is further configured to receive reply information which is sent by the other consumers or the first consumer, and push the reply information to the first consumer or the other consumers; and
an evaluating module 422, which is configured to receive evaluation made by the first consumer to the other consumers, and/or receive evaluation made by the other consumers to the first consumer.

In another embodiment of the disclosure, the server further includes an information publishing platform 43; the information publishing platform 43 includes:
an information receiving module 431, which is configured to receive advertisement information from the consumption place; and
an information publishing module 432, which is configured to push the advertisement information of the consumption place to the first consumer and/or the other consumers.

It can be seen from the above technical solution that the embodiments of the disclosure has the following beneficial effects:
1) a server can help a consumer look for other co-purchasers in time according to the location of a consumption place, thereby making maximum use of promotions of the consumption place; and
2) the first consumer and other consumers may communicate with each other through an SNS interaction platform, thereby improving the user experience effectively.

The above are only the preferred embodiments of the disclosure; it should be noted that, on the premise of not departing from the principles of the disclosure, the common skilled in the technical field may also make a number of improvements and supplements and these improvements and supplements shall fall within the scope of the claims of the disclosure.

## Claims

1. A method for information processing, comprising:
acquiring, by a server, first co-purchase information which is related to a consumption place and input by a first consumer;
acquiring, by the server, second co-purchase information which is related to the consumption place and input by other consumers according to a geological location of the consumption place;
pushing, by the server, the second co-purchase information to the first consumer;
when the first consumer determines to participate in a co-purchase that the other consumers have joined in, generating, by the server, consumption information of each consumer according to the first co-purchase information and the second co-purchase information; and
pushing, by the server, the consumption information of each consumer to the first consumer and the other consumers.

2. The method for information processing according to claim 1, before the server pushes the second co-purchase information to the first consumer, the method further comprising:
determining, by the server, whether the second co-purchase information and the first co-purchase information comply with a predetermined policy; if complying with the predetermined policy, then pushing by the server the second co-purchase information to the first consumer; if not, ending the process of the method for information processing.

3. The method for information processing according to claim 2, wherein the predetermined policy comprises that: both the second co-purchase information and the first co-purchase information are related to a same merchant in the consumption place; or, both the second co-purchase information and the first co-purchase information are related to a same merchandise in the consumption place; or, both the second co-purchase information and the first co-purchase information are related to a same brand in the consumption place.

4. The method for information processing according to claim 1, when the first consumer determines to participate in a co-purchase that other consumers have joined in, the method further comprising:
receiving, by the server, communication information which is sent by the first consumer or the other consumers through a Social Networking Services (SNS) interaction platform, and correspondingly pushing the communication information to the other consumers or the first consumer; and
receiving, by the server, reply information which is sent by the other consumers or the first consumer through the SNS interaction platform, and correspondingly pushing the reply information to the first consumer or the other consumers.

5. The method for information processing according to claim 1, wherein when there is multiple pieces of second co-purchase information, pushing by the server the second co-purchase information to the first consumer comprises:
sorting, by the server, the multiple pieces of second co-purchase information according to discounts; and
pushing, by the server, the sorted multiple pieces of second co-purchase information to the first consumer.

6. The method for information processing according to claim 1, further comprising:
pushing, by the server, advertising information of the consumption place to the first consumer and/or the other consumers.

7. The method for information processing according to claim 1, before the server generates the consumption information of each consumer according to the first co-purchase information and the second co-purchase information, the method further comprising:
determining, by the server, whether the other consumers allow the first consumer to participate in the co-purchase; if not allowed, ending the process of the method for information processing; if allowed, generating by the server the consumption information of each consumer according to the first co-purchase information and the second co-purchase information.

8. The method for information processing according to claim 1, after the co-purchase is ended, the method further comprising:
receiving, by the server, evaluation made by the first consumer to the other consumers on the SNS interaction platform; and/or
receiving, by the server, evaluation made by the other consumers to the first consumer on the SNS interaction platform.

9. A server for information processing, comprising a data processing platform; wherein the data processing platform comprises:
a first acquiring module, which is configured to acquire first co-purchase information which is related to a consumption place and input by a first consumer;
a second acquiring module, which is configured to acquire second co-purchase information which is related to the consumption place and input by other consumers according to a geological location of the consumption place;
a first pushing module, which is configured to push the second co-purchase information to the first consumer;
a processing module, which is configured to, when the first consumer determines to participate in a co-purchase that the other consumers have joined in, generate consumption information of each consumer according to the first co-purchase information and the second co-purchase information; and
a second pushing module, which is configured to push the consumption information of each consumer to the first consumer and the other consumers.

10. The server according to claim 9, further comprising a Social Networking Services (SNS) interaction platform; wherein the SNS interaction platform comprises:
an interacting module, which is configured to receive communication information which is sent by the first consumer or the other consumers, and push the communication information to the other consumers or the first consumer; besides, the interacting module is further configured to receive reply information which is sent by the other consumers or the first consumer, and push the reply information to the first consumer or the other consumers; and
an evaluating module, which is configured to receive evaluation made by the first consumer to the other consumers, and/or receive evaluation made by the other consumers to the first consumer.
